Europäisches Patentamt

European Patent Office

Office européen des brevets

(19)

(11) Publication number: **0 164 419**
**B1**

## EUROPEAN PATENT SPECIFICATION

(12)

(45) Date of publication of patent specification: **08.03.89**

(51) Int. Cl.⁴: **B 29 C 45/66**

(21) Application number: **84904175.1**

(22) Date of filing: **20.11.84**

(86) International application number:
**PCT/JP84/00555**

(87) International publication number:
**WO 85/02363 06.06.85 Gazette 85/13**

(54) **MOLD CLAMPING APPARATUS.**

(30) Priority: **24.11.83 JP 219515/83**

(43) Date of publication of application:
**18.12.85 Bulletin 85/51**

(45) Publication of the grant of the patent:
**08.03.89 Bulletin 89/10**

(84) Designated Contracting States:
**CH DE LI**

(56) References cited:
**DE-C- 518 347**
**FR-A-1 183 875**
**GB-A- 288 398**
**JP-B-44 005 101**
**JP-B-50 002 370**
**JP-Y-38 007 488**
**US-A-3 292 214**

**PATENT ABSTRACTS OF JAPAN, vol. 9, no. 51
(M-361)1774r, 6th March 1985**

(73) Proprietor: **FANUC LTD
3580, Shibokusa Aza-Komanba Oshino-mura
Minamitsuru-gun Yamanashi 401-05 (JP)**

(72) Inventor: **ISHIKAWA, Yasushi Dai3shataku, 1205
Marubikishi
Shibokusa, Oshino-mura Minamitsuru-gun
Yamanashi 401-05 (JP)**
Inventor: **HUKUROI, Takeshi Dai2shataku, 1185-
3, Marubikishi
Shibokusa, Oshino-mura Minamitsuru-gun
Yamanashi 401-05 (JP)**

(74) Representative: **Billington, Lawrence Emlyn
et al
HASELTINE LAKE & CO Hazlitt House 28
Southampton Buildings Chancery Lane
London WC2A 1AT (GB)**

## Description

The present invention relates to a lock for locking molds of an injection molding apparatus.

A conventional toggle type lock in an injection molding apparatus is driven by a hydraulic mechanism. For this reason, a hydraulic pump, valves or the like are required, thus complicating the construction of the conventional lock drive mechanism. The locking operation must be controlled by a hydraulic pressure. As a result, locking speed control is complex and cannot be easily performed.

JP—A—59-187 826 discloses a method of clamping molds in a molding machine, using a servo motor and a transmission mechanism having a screw and nut mechanism for converting a rotational force of the servo motor to a linear force.

According to the present invention, there is provided a lock for locking molds of an injection moulding apparatus comprising a servo motor and a transmission mechanism having a screw and a nut mechanism for converting a rotational force of said servo motor to a linear force, characterised in that:

the lock further comprises a toggle mechanism operable by the transmission mechanism to lock the molds;

and in that when links of said toggle mechanism are in a straightened state thereby locking the molds, said servo motor is operable under a current less than a normal operating current to hold the links in the straightened state.

An embodiment of the present invention may eliminate or mitigate the drawbacks of the prior art and provide a toggle type lock whose locking operation can be easily controlled.

In this manner, the servo motor is used as a drive source of the toggle mechanism for performing locking, so that locking speed control can be easily performed to obtain a desired locking speed. Furthermore, since a toggle mechanism is employed, a compact servo motor can be used, thus resulting in a simple structure and easy maintenance. When a locking force is controlled, a position sensor mounted on the servo motor precisely controls the positions of the screw and the toggle mechanism, thereby simplifying locking force control.

When molds are closed and continuously locked at a predetermined pressure, a link of the toggle mechanism is kept straight. The toggle mechanism itself is stably operated to hold the molds while the molds are locked. For this reason, not much power need be supplied to the servo motor. Only a small current need be supplied to the servo motor only for preventing the molds and the link of the toggle mechanism from being moved due to vibrations or the like, thereby decreasing energy consumption.

Unlike the conventional lock, a hydraulic mechanism is not used, so that operation reliability is improved. In the conventional lock, a hydraulic pump is operated with power to generate a hydraulic pressure used to drive the drive mechanism. In order to maintain a predetermined pressure, a large power loss occurs. However, in embodiments of the present invention, electric power is used only to drive the servo motor, and the drive mechanism is directly driven by the output from the servo motor. As a result, an energy loss can be decreased.

Reference is made, by way of example, to the accompanying drawings in which:

Figure 1 shows a first embodiment of the present invention;

Figure 2 shows a second embodiment of the present invention; and

Figure 3 shows a third embodiment of the present invention.

The present invention will be described in detail with reference to the accompanying drawings.

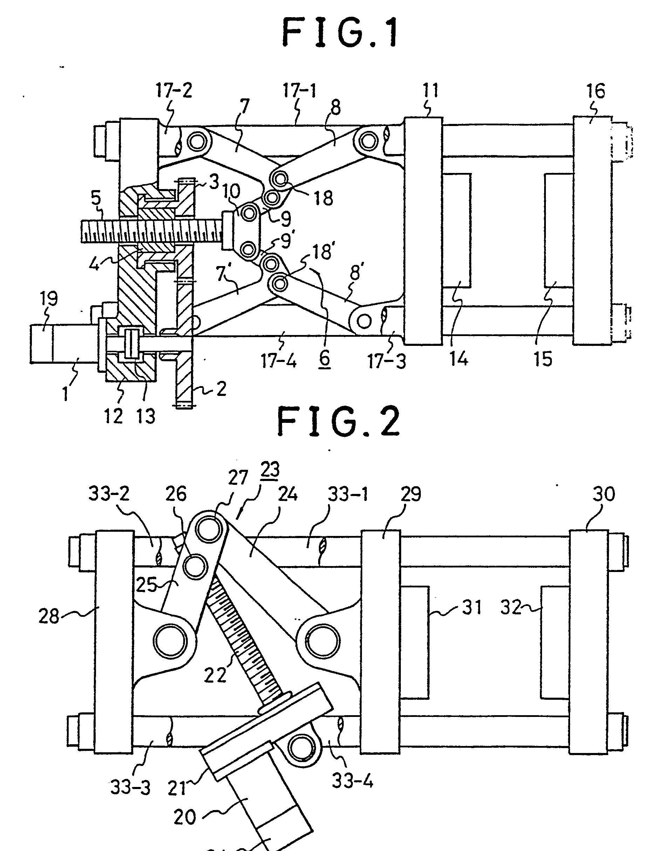

Figure 1 shows a first embodiment of the present invention. Reference numeral 1 denotes a servo motor; 2 and 3, gears, respectively; 4, a nut fixed on the gear 3; and 5, a screw engaged with the nut 4. The gears 2 and 3, the nut 4, the screw 5 and the like constitute a transmission mechanism for transmitting power from the servo motor 1 to a toggle mechanism 6. The toggle mechanism 6 is of double toggle type. One end of each of links 9 and 9′ is pivotally supported by a crosshead 10 mounted at a distal end of the screw 5. The other end of each of the links 9 and 9′ is pivotally supported by a corresponding one of links 7 and 7′. Links 8 and 8′ are pivotally supported by the links 7 and 7′, respectively. The links 7 and 7′ are pivotally supported by a fixed back pressure plate 12. The links 8 and 8′ are pivotally supported by a movable base 11. The links 7 and 7′, 8 and 8′ and 9 and 9′ and the crosshead 10 constitute the toggle mechanism 6. Reference numerals 14 and 15 denote molds, respectively. The molds 14 and 15 are fixed on the movable base 11 and a fixed base 16. The fixed base 16 and the fixed back pressure plate 14 are connected by four tie bars 17-1 to 17-4. The movable base 11 can be moved by the toggle mechanism 6 between the tie bars 17-1 to 17-4 along the right-and-left direction of Figure 1. Reference numeral 13 denotes a coupling device for transmitting the output from the servo motor 1 to the gear 2. Reference numeral 19 denotes a position sensor mounted on the servo motor 1.

In operation, when the servo motor 1 is rotated, the gear 2 is rotated through the coupling device 13. The gear 3 meshed with the gear 2 and then the nut 4 fixed to the gear 3 are rotated. When the nut 4 is rotated, the screw 5 meshed with the nut 4 is pushed upon pivotal movement of the nut 4. The screw 5 is shifted to the right in Figure 1. In this manner, the rotational force of the servo motor 1 is converted to a linear force of the screw 5. When the screw 5 is gradually moved to the right in Figure 1, the crosshead 10 fixed to the distal end of the screw 5 vertically (Figure 1) separates a joint 18 between the links 7 and 8 from a joint 18′ between the links 7′ and 8′ through the links 9 and 9′. The movable base 11 and the mold 14 fixed on the movable base 11 are shifted to the right in Figure 1. The molds 14 and 15 are closed immediately before the links 7 and 8 and the links 73' and 8' become straight. When the links 7 and 8 and the links 7' and 8' become straight, the servo motor 1 is stopped. The tie bars 17-1 to 17-4 are kept taut to a degree that the links 7 and 8 and the links 7' and 8' are kept completely straight. The molds 14 and 15 are clamped by an elastic restoration force generated by extension of the tie bars 17-1 to 17-4. When the molds 14 and 15 are opened, the servo motor 1 is rotated in the reverse direction to shift the screw 5 to the left in Figure 1, thereby obtaining the state of Figure 1.

During locking of the molds as described above, the molds 14 and 15 are locked when the links 7, 8, 7' and 8' in the toggle mechanism 6 become straight. The toggle mechanism 6 itself is kept stable. The toggle mechanism 6 holds the molds while locking them, so that a reaction force of the locking force does not substantially act on the screw 5. For this reason, not much power need be supplied to the servo motor 1. Only a small current for preventing the mold 14 and the links 7, 8, 7' and 8' of the toggle mechanism 6 from being shifted by vibrations or the like need be supplied to the servo motor 1. Furthermore, when the servo motor 1 is stopped before the links 7, 8, 7' and 8' in the toggle mechanism 6 become completely straight, thereby controlling the locking force of the molds 14 and 15, a very small reaction force acts on the screw 5. Such a force can be absorbed by friction in the transmission device of gears 2 and 3 or the like and will not be substantially transmitted to the servo motor 1. When a servo motor with a brake mechanism is used as needed, the molds can be further held at the predetermined position, and a predetermined locking force can also be obtained.

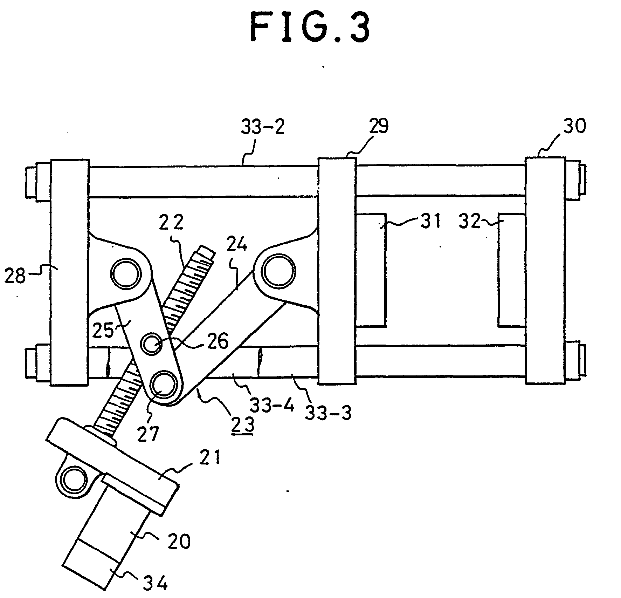

Figures 2 and 3 show other embodiments using single toggle mechanisms, respectively. Reference numeral 20 denotes a servo motor; 21, a gear box; 22, a screw; 23, a toggle mechanism; 24 and 25, links in the toggle mechanism 23; and 26, a nut pivotally mounted on the link 25. The nut 26 is meshed with the screw 22. Reference numeral 27 denotes a joint between the links 24 and 26; 28, a fixed back pressure plate; 29, a movable base; 30, a fixed base; 31 and 32, molds, respectively; 33-1 to 33-4, tie bars, respectively; and 34, a position sensor.

Describing the operation of the embodiment shown in Figure 2, when the servo motor 20 is rotated, the screw 22 is rotated through the gear in the gear box 21. The nut 26 meshed with the screw 22 is moved along the screw 22 downward in Figure 2. As a result, the links 25 and 26 in the toggle mechanism 23 are held straight to shift the movable base 29 and the mold 31 to right in Figure 2, thereby closing and locking the molds 31 and 32. This operation is the same as that in the first embodiment of Figure 1.

The embodiment of Figure 3 is substantially the same as that of Figure 2, except that the nut 26 is pushed while the nut 26 is pulled toward the servo motor 20 upon rotation of the screw 22 in the second embodiment.

## Claims

1. A lock for locking molds (14, 15; 31, 32) of an injection moulding apparatus comprising a servo motor (1, 20) and a transmission mechanism (2, 3, 4, 5; 21, 22) having a screw (5, 22) and a nut mechanism (4, 21) for converting a rotational force of said servo motor (1, 20) to a linear force, characterised in that:
the lock further comprises a toggle mechanism (7, 8, 9, 7', 8', 9'; 24, 25) operable by the transmission mechanism (2, 3, 4, 5; 21, 22) to lock the molds (14, 15; 31, 32);
and in that when links (7, 8, 7', 8'; 24, 25) of said toggle mechanism are in a straightened state thereby locking the molds (14, 15; 31, 32), said servo motor (1, 20) is operable under a current less than a normal operating current to hold the links in the straighened state.

2. A lock according to Claim 1, wherein said servo motor (1, 20) comprises a brake mechanism for holding the molds (14, 15; 31, 32) at a predetermined position.

3. A lock according to Claim 1 or 2, wherein said toggle mechanism comprises a single toggle type toggle mechanism (24, 25).

4. A lock according to Claim 1 or 2, wherein said toggle mechanism comprises a double toggle type toggle mechanism (7, 8, 9, 7', 8', 9').

5. A lock according to Claim 4, having a fixed back pressure plate (12) connected to one end of a plurality of tie bars (17-1...17-4) extending in parallel with each other, a movable base (11) slidably supported by said tie bars and adapted to receive a first mold (14) and wherein said double toggle type toggle mechanism (7, 8, 9, 7', 8', 9') has at least one pair of link means (7, 7', 8, 8') each of which is pivotally connected between said fixed back pressure plate (12) and said movable base (11) for moving between extended and retracted positions, said lock being arranged to move said movable base (11) with respect to a fixed base (16) to which a second mold (15) is fixed, until said link means (7, 7', 8, 8') becomes straight, so that the first and second molds (14, 15) are clamped by an elastic restoration force generated by extension of said tie bars (17-1...17-4) said nut mechanism (4) being rotatably supported by said fixed back pressure plate (12) and said screw (5) being threadedly engaged with said nut mechanism (4) and extending substantially in parallel with said tie bars (17-1...17-4).

## Patentansprüche

1. Schließvorrichtung zum Schließen von Formen (14, 15; 31, 32) einer Spritzgußvorrichtung, mit einem Servomotor (1, 20) und einem Kraftübertragungsmechanismus (2, 3, 4, 5; 21, 22), der einem Gewindebolzen (5, 22) und einen Muttermechanismus (4, 21) zum Umsetzen einer drehenden Kraft des Servomotors (1, 20) in eine linear wirkende Kraft aufweist, dadurch gekennzeichnet, daß die Schließvorrichtung desweiteren einen Gelenkmechanismus (7, 8, 9, 7', 8', 9'; 24, 25) enthält, der durch den Kraftübertragungsmechanismus (2, 3, 4, 5; 21, 22) betätigbar ist, um die Formen (14, 15; 31, 32) zu schließen, und daß, wenn sich Gelenke (7, 8, 7', 8'; 24, 25) des Gelenkmechanismus in einem gestreckten Zustand befinden, um dadurch die Formen (14, 15; 31, 32) zu schließen, der Servomotor (1, 20) mit einem Strom, der geringer als ein normaler Betriebsstrom ist, betreibbar ist, um die Gelenke in dem gestreckten Zustand zu halten.

2. Schließvorrichtung nach Anspruch 1, bei der der Servomotor (1, 20) einen Bremsmechanismus zum Halten der Formen (14, 15; 31, 32) in einer vorbestimmten Position enthält.

3. Schließvorrichtung nach Anspruch 1 oder 2, bei der der Gelenkmechanismus aus einem Einfachgelenkmechanismus (24, 25) besteht.

4. Schließvorrichtung nach Anspruch 1 oder 2, bei der der Gelenkmechanismus aus einem Doppelgelenkmechanismus (7, 8, 9, 7', 8', 9') besteht.

5. Schließvorrichtung nach Anspruch 4, die eine feststehende Gegendruckplatte (12), die jeweils mit einem Ende einer Vielzahl von Verbindungsstangen (17-1...17-4) verbunden ist, welche sich parallel zueinander erstrecken, und einen beweglichen Träger (11) hat, der verschiebbar durch die Verbindungsstangen gehalten ist und dazu bestimmt ist, eine erste Form (14) aufzunehmen, und bei der der Doppelgelenkmechanismus (7, 8, 9, 7', 8', 9') zumindest ein Paar von Gelenkarmen (7, 7', 8, 8') aufweist, wovon jeder schwenkbar zwischen der feststehenden Gegendruckplatte (12) und dem beweglichen Träger (11) zum Bewegen zwischen einer ausgestreckten und einer zurückgezogenen Position angeordnet ist, wobei die Schließvorrichtung vorgesehen ist, um den beweglichen Träger (11) in bezug auf einen feststehenden Träger (16) zu bewegen, an dem eine zweite Form (15) befestigt ist, bis die Gelenkarme (7, 7', 8, 8') gestreckt sind, so daß die erste und die zweite Form (14, 15) durch eine elastische Rückstellkraft zusammengeklemmt sind, die durch Dehnung der Verbindungsstangen (17-1...17-4) erzeugt wird, und wobei der Muttermechanismus (4) drehbar durch die feststehende Gegendruckplatte (12) gehalten ist und der Gewindebolzen (5) schraubbar mit dem Muttermechanismus (4) in Eingriff steht und sich im wesentlichen parallel zu den Verbindungsstangen (17-1...17-4) erstreckt.

**Revendications**

1. Verrou pour verrouiller des moules (14, 15; 31, 32) d'une installation de moulage par injection comportant un servomoteur (1, 20) et un mécanisme de transmission (2, 3, 4, 5; 21, 22) comprenant une vis (5, 22) et un mécanisme à écrou (4, 21) pour convertir une force exercée en rotation par le servomoteur (1, 20) en une force linéaire, caractérisé en ce que:

le verrou comporte en outre un mécanisme à bascule (7, 8, 9, 7', 8', 9'; 24, 25) qui peut être actionné par le mécanisme de transmission (2, 3, 4, 5; 21, 22) en vue de verrouiller les moules (14, 15; 31, 32), et

lorsque des éléments de liaison (7, 8, 7', 8'; 24, 25) du mécanisme à bascule sont dans leur état redressé et ce faisant verrouillent les moules (14, 15; 31, 32), le servomoteur (1, 20) peut être actionné par l'effet d'un courant inférieure au courant normal d'actionnement pour maintenir les éléments de liaison dans leur état redressé.

2. Verrou selon la revendication 1, dans lequel le servomoteur (1, 20) comporte un mécanisme de freinage afin de maintenir les moules (14, 15; 31, 32) dans une position prédéterminée.

3. Verrou selon la revendication 1 ou 2, dans lequel le mécanisme à bascule comporte un mécanisme à bascule (24, 25) du type à bascule simple.

4. Verrou selon la revendication 1 ou 2, dans lequel le mécanisme à bascule comporte un mécanisme à bascule (7, 8, 9, 7', 8', 9') du type à bascule double.

5. Verrou selon la revendication 4, comprenant une contreplaque de pression fixe (12) reliée à une extrémité d'une multiplicité de tirants (17-1...17-4) qui s'étendent parallèlement les uns aux autres, une embase mobile (11) supportée à glissement par les tirants et adaptée à recevoir un premier moule (14), et dans lequel le mécanisme à bascule (7, 8, 9, 7', 8', 9') du type à bascule double comprend au moins une paire de moyens de liaison (7, 7', 8, 8') dont chacun est disposé et relié à pivotement entre la plaque de pression fixe (12) et l'embase mobile (11) afin de pouvoir se déplacer entre des positions respectives étendue et rétractée, le verrou étant conçu de façon à pouvoir déplacer l'embase mobile (11) par rapport à une embase fixe (16) à laquelle est fixé un deuxième moule (15) jusqu'à ce que les moyens de liaison (7, 7', 8, 8') soient redressés, de sorte que les premier et deuxième moules (14, 15) sont pincés par une force de remise en place élastique engendrée par le redressement des tirants (17-1...17-4), le mécanisme à écrou (4) étant supporté à rotation par la plaque de pression fixe (12) et la vis (5) étant en prise par filetage avec le mécanisme à écrou (4) et s'étendant essentiellement en parallèle avec les tirants (17-1...17-4).

# FIG.1

# FIG.2

EP 0 164 419 B1

# FIG.3